# EUROPÄISCHE PATENTANMELDUNG

(11) **EP 2 561 793 A2**
(43) Veröffentlichungstag der Anmeldung: **27.02.2013**
(21) Anmeldenummer: 12006005.8
(22) Anmeldetag: 22.08.2012
(51) Int. Cl.: A47L 23/24, A47L 23/22, A47L 23/26, B60R 3/04

(54) **Herausnehmbarer Schmutzsammelbehälter für eine Schmutzfangvorrichtung zum Einbau in Fahrzeuge oder Gebäude**

(30) Priorität: 24.08.2011 DE 202011105169 U
(71) Anmelder: Leben, Dietrich, 14547 Beelitz (DE)
(72) Erfinder: Leben, Dietrich, 14547 Beelitz (DE)
(74) Vertreter: Scholz, Hartmut

(57) **Zusammenfassung**

Schmutzfangvorrichtung zum Einbau in Fahrzeuge oder Gebäude, mit einer Schmutzfangwanne (11), die in eine Wannenaufnahme (12) eingelegt werden kann. Die Schmutzfangwanne (11) ist mit einem Gitterrost (14) abgedeckt, unter dem ein Schmutzkasten (18) angeordnet ist. Das Gitterrost (14) ist mit Abstandshaltern (16) in einem vorbestimmten Abstand zu dem Wannenboden (13) der Wannenaufnahme (12) gehalten wird und in den schmutzkasten (18) ein herausnehmbarer Schmutzsammelbehälter (19) eingesetzt ist.

## Beschreibung

Die Erfindung betrifft eine Schmutzfangvorrichtung zum Einbau in Fahrzeuge oder Gebäude, mit einer in eine Wannenaufnahme einlegbaren Schmutzfangwanne, einem die Schmutzfangwanne abdeckenden Gitterrost und einem darunter angeordneten Schmutzkasten, wobei das Gitterrost mittels Abstandshaltern in einem vorbestimmten Abstand zu dem Wannenboden der Wannenaufnahme gehalten ist.

Bei Fahrzeugen, insbesondere bei schweren Baumaschinen, ist im Bereich des Bodens der Fahrerkabine häufig eine starke Verschmutzung durch Sand, Lehm oder Wasser zu beobachten. Derartige Verschmutzungen können solche Ausmaße annehmen, dass sie zu Unfällen und Bedienungsfehlern führen. Aus der US 1,698,005 A sind dazu kastenförmige Einstiegsstufen bekannt, die mit Schuhbürsten versehen sind. Mit diesen Schuhbürsten kann sich eine einsteigende Person die Schuhsohlen sauber bürsten.

Auch bei Gebäuden, beispielsweise bei Warenhäusern, Behörden und dergleichen, werden häufig an den Schuhen von Besuchern anhaftender Schmutz und Feuchtigkeit in die Eingangsbereiche eingetragen. Derartige Schmutz- und Feuchtigkeitseintragungen sind mit erheblichen Kosten für die Reinigung und die Verkehrssicherung verbunden. Aus der FR 2 788 426 A ist dazu eine Reinigungsvorrichtung bekannt, die mit einem Gitterrost zur Beseitigung von groben Schmutzanhaftungen und einer Teppichmatte für feinere Schmutzanhaftungen versehen ist. Für den Einbau in Fahrzeuge ist eine solche Vorrichtung nicht geeignet.

Aus der CH 414 963 A ist ferner eine Reinigungsvorrichtung bekannt, bei der eine motorisch getriebene Bürste zwischen Gitterstäben übersteht, um Schmutzanhaftungen von Schuhsohlen zu beseitigen. Auch eine solche Vorrichtung ist für den Einbau in Fahrzeuge nicht geeignet.

Schließlich ist aus der DE 1 628 771 eine Reinigungsvorrichtung bekannt, bei der mittels einer Wippe eine Wasserbrause ausgelöst werden kann, um Schmutzanhaftungen von Schuhsohlen abwaschen zu können. Eine solche Vorrichtung ist für den Einbau in Fahrzeuge ebenfalls nicht geeignet. Bei allen diesen Vorrichtungen besteht die Notwendigkeit, die einmal gesammelten Verschmutzungen wieder zu entsorgen.

Aufgabe der vorliegenden Erfindung ist es, eine Vorrichtung zu schaffen, mit der gesammelte Verschmutzungen schnell und einfach entsorgt werden können.

Gelöst wird diese Aufgabe durch die Maßnahmen, wie sie in dem Anspruch 1 beschrieben sind, insbesondere wird diese Aufgabe durch einen in den Schmutzkasten herausnehmbar eingesetzten Schmutzsammelbehälter gelöst. Weitere vorteilhafte Ausgestaltungen sind in den Unteransprüchen beschrieben.

Bei einer vorteilhaften Ausführung der Erfindung ist ein zweigeteilter Schmutzsammelbehälter vorgesehen, der aus einem oberen Behälterdeckel und einem Behälterunterteil besteht, die über einen variablen Freiraum zueinander beabstandet sind.

Bei einer vorteilhaften Ausführung der Erfindung ist das Behälterunterteil topfartig ausgebildet und über ein zentrisches Führungsrohr mit dem Behälterdeckel verbunden. Dabei besteht das Führungsrohr erfindungsgemäß aus einem Innenrohr und einem Außenrohr, die ineinander geschoben werden können.

In dem Außenrohr des zentrischen Führungsrohrs ist erfindungsgemäß eine gegen das Innenrohr drückende Feder angeordnet und in dem Deckelrand des Behälterdeckels ist eine abknickende Führungsnut zur Aufnahme von Bajonettbolzen vorgesehen. Durch diese Maßnahmen kann der Behälterdeckel in Richtung auf das Behälterunterteil bewegt und verdreht werden, bis die Bajonettbolzen in den Führungsnuten einrasten. Danach kann der Behälterdeckel losgelassen werden und ist durch die als Schraubendruckfeder ausgebildete Feder gegen Klappern gesichert arretiert.

Bei einer weiteren vorteilhaften Ausführung der Erfindung ist dem oberen Rand des Behälterunterteils eine radial außen rundum laufende Dichtlippe zugeordnet. Durch diese Maßnahme wird sichergestellt, dass der in die Schmutzfangwanne rieselnde Schmutz in den Schmutzsammelbehälter gelangt und nicht daneben fällt.

Die Erfindung wird nachfolgend anhand beispielhafter Ausführungsformen unter Bezugnahme auf die beigefügte Zeichnung näher erläutert; es zeigt:
- **Figur 1**: die Draufsicht auf den Gitterrost einer erfindungsgemäßen Schmutzfangvorrichtung, mit einem eingelassenen Schmutzsammelbehälter;
- **Figur 2**: den Schnitt entlang der Linie A - A in Figur 1 durch eine erfindungsgemäße Schmutzfangvorrichtung, mit einer Schmutzfangwanne und einem zu einem Schmutzkasten führenden Bodengefälle;
- **Figur 3**: den Schnitt entlang der Linie A - A in Figur 1 durch eine erfindungsgemäße Schmutzfangvorrichtung nach Figur 2, mit einer Schmutzfangwanne und einem in den Schmutzkasten eingesetzten Schmutzsammelbehälter;
- **Figur 4**: den Schnitt entlang der Linie A - A in Figur 1 durch eine erfindungsgemäße Schmutzfangvorrichtung nach den Figuren 2 und 3, mit einer die Schmutzfangwanne überdeckenden Gewebematte;
- **Figur 5**: den Schnitt entlang der Linie A - A in der Figur 1 durch einen erfindungsgemäßen Schmutzsammelbehälter nach der Figur 3;
- **Figur 6**: die Seitenansicht eines erfindungsgemäßen schmutzsammelbehälters nach der Figur 5 in geöffnetem Zustand;
- **Figur 7**: die Draufsicht auf einen erfindungsgemäßen Schmutzsammelbehälter.

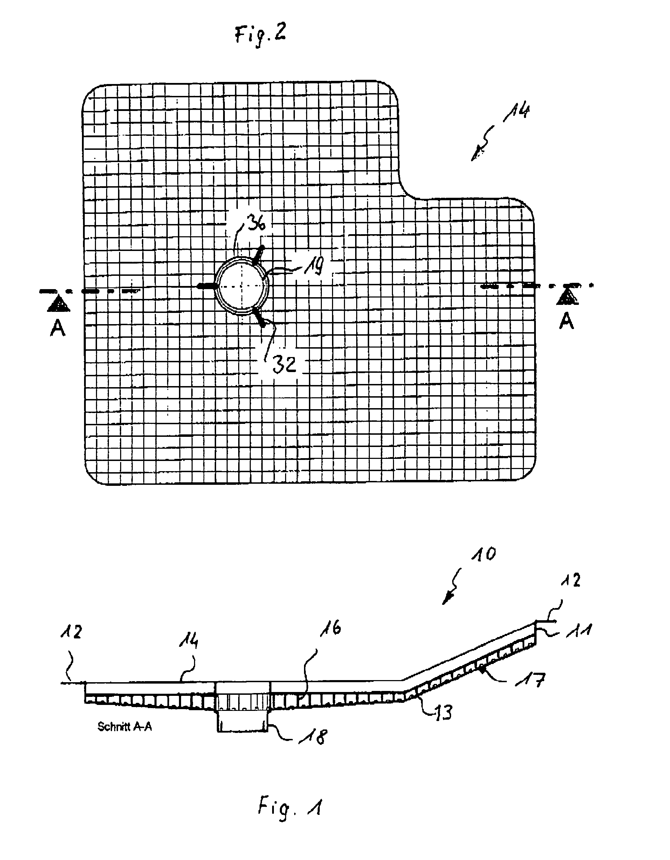

Die in der Figur 1 dargestellte Schmutzfangvorrichtung 10 weist eine Schmutzfangwanne 11 auf, die in eine Bau- oder Fahrzeugseitig vorhandene Wannenaufnahme 12 eingesetzt werden kann. Die Schmutzfangwanne 11 ist in Einbaulage unten mit einem Wannenboden 13 versehen und in Einbaulage oben mit einem in der Figur 2 dargestellten Gitterrost 14 abgedeckt.

Das in der Figur 2 dargstellte Gitterrost 14 ist mit einer vorzugsweise kreisrunden Einsetzöffnung 36 versehen. In diese Einsetzöffnung 36 kann ein Schmutzsammelbehälter 19 eingesetzt und mit auf ihrem Umfang verteilten Bajonettbolzen 32 arretiert werde, vorzugsweise sind dazu drei Bajonettbolzen 32 vorgesehen. Das Gitterrost 14 ist auf dem Wannenboden 13 mit variablen Abstandshaltern 16 abgestützt.

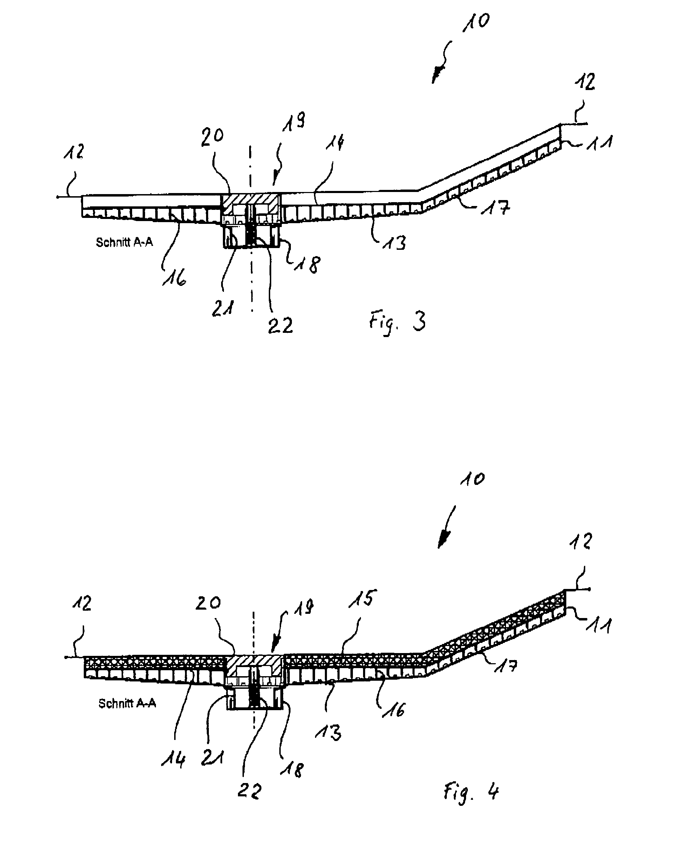

Der wannenboden 13 ist mit einem Bodengefälle 17 versehen, das zu einem Schmutzkasten 18 hin abfällt, In den Schmutzkasten 18 ist der Schmutzsammelbehälter 19 einsetzt, wie es die Figur 3 zeigt.

Wie die Figur 4 zeigt, ist zwischen der Schmutzfangwanne 11 und dem Gitterrost 14 eine Gewebematte 15 vorgesehen. Die Gewebematte 15 ist für Schmutz, Schlamm, Feuchtigkeit, Wasser und dergleichen nach unten hin durchlässig, so dass sich diese aufgrund des Bodengefälles 17 in dem Schmutzkasten 18 sammeln können.

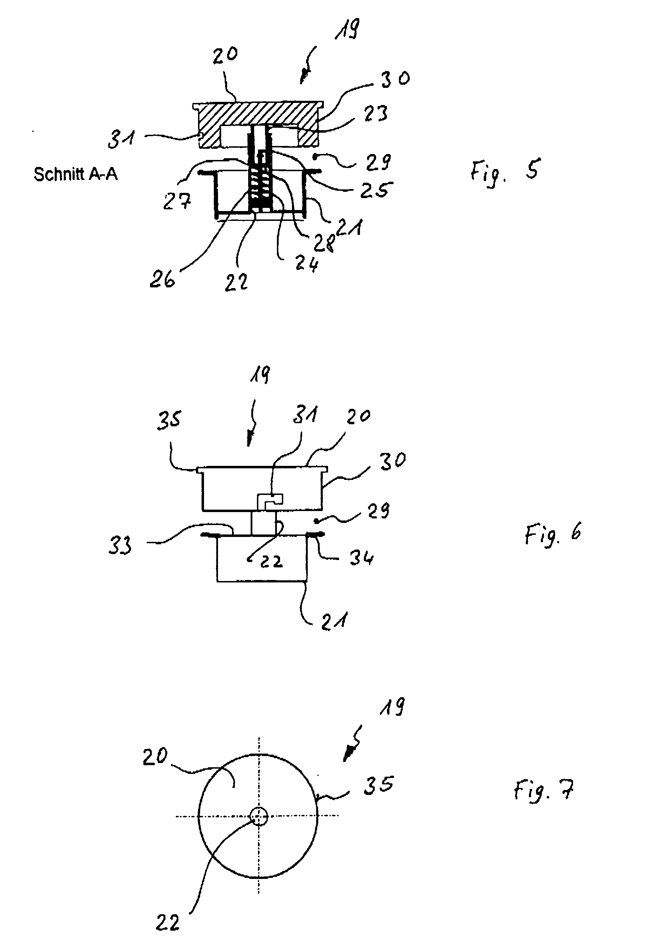

Wie die Figur 5 im Detail zeigt, besteht der erfindungsgemäße Schmutzsammelbehälter 19 aus einem Behälterdeckel 20 und einem topfartigen Behälterunterteil 21, die über ein Führungsrohr 22 miteinander verbunden sind. Das Führungsrohr 22 besteht aus einem Innerohr 23 und einem Außenrohr 24, in denen ein Führungsbolzen 25 verläuft.

Um den Führungsbolzen 25 herum ist eine Feder 26, vorzugsweise eine Schraubdruckfeder, in das Außenrohr 24 gelegt. Die Oberkante 27 der Schraubendruckfeder 26 drückt dabei gegen die Unterkante 28 des Innenrohrs 23.

Zwischen dem Behälterdeckel 20 und dem Behälterunterteil 21 besteht ein variabler Freiraum 29, um den der Behälterdeckel 20 gegen das Behälterunterteil. 21 verschoben werden kann.

In dem seitlichen Deckelrand 30 des Behälterdeckels 20 verlaufen abknickende Führungsnuten 31, in denen Bajonettbolzen 32 verlaufen können. Mit den Bajonettbolzen 32 kann der Behälterdeckel 20 mit Schmutzfangwanne 11 lösbar verbunden werden.

Die in der Figur 2 dargestellten drei Bajonettbolzen 32 der Einsetzöffnung 36 können mit den abknickenden Führungsnuten 31 in dem seitlichen Deckelrand 30 des Behälterdeckels 20 lösbar verbunden werden.

Der obere Rand 33 des Behälterunterteils 21 ist mit einer rundum laufenden, radial nach außen weisenden Dichtlippe 34 versehen. Mit der Dichtlippe 34 kann der Schmutzaufnahmebehälter 19 gegenüber dem Schmutzkasten 18 der Schmutzfangwanne 11 abgedichtet werden.

Zur besseren Handhabung ist der Behälterdeckel 20 mit einem radial außen rundum laufenden Griffrand 35 versehen. Der Behälterdeckel 20 kann gegen die Kraft der Feder 26 relativ zu dem Behälterunterteil 21 gedrückt werden.

Zur Verbindung können die Führungsnuten 31 bei Erreichen der entsprechenden Position mit den Bajonettbolzen 32 in Wirkverbindung gedreht werden. Der Behälterdeckel 20 wird durch die Feder 26 wieder nach außen gedrückt und der Schmutzsammelbehälter 11 ist klappersicher mit der Schmutzfangwanne 11 der Schmutzfangvorrichtung 10 verbunden.

### Bezugezeichen

- 10: Schmutzfangvorrichtung
- 11: Schmutzfangwanne
- 12: Wannenaufnahme
- 13: Wannenboden
- 14: Gitterrost
- 15: Gewebematte
- 16: variable Abstandshalter
- 17: Bodengefälle
- 18: Schmutzkasten
- 19: Schmutzsammelbehälter
- 20: Behälterdeckel
- 21: Behälterunterteil
- 22: Führungsrohr
- 23: Innenrohr
- 24: Außenrohr
- 25: Führungsbolzen
- 26: Schraubenfeder
- 27: Federoberkante
- 28: Innenrohrunterkante
- 29: variabler Freiraum
- 30: Deckelrand
- 31: abknickende Führungsnut
- 32: Bajonettbolzen
- 33: oberer Rand
- 34: Dichtlippe
- 35: Griffrand
- 36: Einsetzöffnung

## Patentansprüche

1. Schmutzfangvorrichtung zum Einbau in Fahrzeuge oder Gebäude, mit einer in eine Wannenaufnahme (12) einlegbaren Schmutzfangwanne (11), einem die Schmutzfangwanne (11) abdeckenden Gitterrost (14) und einem darunter angeordneten Schmutzkasten (18), wobei das Gitterrost (14) mittels Abstandshaltern (16) in einem vorbestimmten Abstand zu dem Wannenboden (13) der Wannenaufnahme (12) gehalten ist, **dadurch gekennzeichnet, dass** in den Schmutzkasten (18) ein herausnehmbarer Schmutzsammelbehälter (19) eingesetzt ist.

2. Schmutzfangvorrichtung nach Anspruch 1, **dadurch gekennzeichnet, dass** der Schmutzsammelbehälter (19) zweigeteilt ist und aus einem oberen Behälterdeckel (20) und einem Behälterunterteil (21) besteht, die durch einen variablen Freiraum (29) zueinander beabstandet sind.

3. Schmutzfangvorrichtung nach den Ansprüchen 1 und 2, **dadurch gekennzeichnet, dass** das Behälterunterteil (21) topfartig ausgebildet und über ein Führungsrohr (22) mit dem Behälterdeckel (20) verbunden ist.

4. Schmutzfangvorrichtung nach Anspruch 3, **dadurch gekennzeichnet, dass** das Führungsrohr (22) zentrisch angeordnet ist und aus einem Innenrohr (23) und einem Außenrohr (24) besteht, die ineinander schiebbar sind.

5. Schmutzfangvorrichtung nach den Ansprüchen 3 oder 4, **dadurch gekennzeichnet, dass** in dem Außenrohr (24) des zentrischen Führungsrohrs (22) eine gegen das Innenrohr (23) drückende Feder (26) angeordnet ist.

6. Schmutzfangvorrichtung nach den Ansprüchen 1 bis 3, **dadurch gekennzeichnet, dass** der Behälterdeckel (20) einen Deckelrand (27) aufweist, der mit mindestens einer abknickenden Führungsnut (31) zur Aufnahme von Bajonettbolzen (32) versehen ist.

7. Schmutzfangvorrichtung nach den Ansprüchen 2 und 3, **dadurch gekennzeichnet, dass** der obere Rand (33) des Behälterunterteils (21) mit einer radial außen rundum laufenden Dichtlippe (31) versehen ist.

8. Schmutzfangvorrichtung nach Anspruch 1, **dadurch gekennzeichnet, dass** der Wannenboden (13) mit einem Bodengefälle (17) zu dem Schmutzkasten (18) hin abfällt.

9. Schmutzfangvorrichtung nach Anspruch 1, **dadurch gekennzeichnet**, das zwischen der Schmutzfangwanne (11) und dem Gitterrost (14) eine Gewebematte (15) vorgesehen ist.

10. Schmutzfangvorrichtung nach Anspruch 9, **dadurch gekennzeichnet, dass** die Gewebematte (15) für Schmutz, Schlamm, Feuchtigkeit, Wasser und dergleichen nach unten durchlässig ist.
